# EUROPEAN PATENT APPLICATION

(11) **EP 1 800 722 A1**
(43) Date of publication of application: **27.06.2007**
(21) Application number: 05780505.3
(22) Date of filing: 17.08.2005
(51) Int. Cl.: A63F 13/10

(54) **GAME RESULT EVALUATION METHOD AND DEVICE**

(30) Priority: 15.09.2004 JP 2004268597
(71) Applicant: Konami Digital Entertainment Co., Ltd., Tokyo 106-6114 (JP)
(72) Inventor: NOZAKI, Mitsuhiro c/o Konami Dig. Enter. Co., Ltd., Tokyo 1066114 (JP)
(74) Representative: Driver, Virginia Rozanne
(86) International application number: PCT/JP2005/015001
(87) International publication number: WO 2006/030598

(57) **Abstract**

The score acquired during a game is used to provide a player with greater enjoyment after they get a game over notification. A plurality of ranks S, AI,...,CIII is set and teams T1, T2,... are organized in each rank, wherein each team comprises at least one player. Teams within a rank engage in interteam multiplayer competition. The rank of each player is updated based on the results of the multiplayer competition. The team results, which form the basis for deciding the results of the multiplayer competition, are the cumulation of the game results of the players on the team. The determination of the team results and the updating of ranks are performed with every lapse of a prescribed time period T, e.g., once a month. When the prescribed time period T elapses, the ranks of all players are updated and all teams are reorganized. The possibility that even the weak team members will be able to increase rank to a rank that is above their natural abilities increases the desire to participate in the competition. Moreover, highly skilled players try to advance and participate in the competition in order to lead their team to increase rank, as well as to increase rank themselves.

## Description

### Field of the Invention

The present invention relates to a game results evaluating method that evaluates results of a game obtained after a plurality of players play the game, and displays the evaluation results.

### Background of the Invention

Every time a player obtains more points or clears a higher and more difficult game stage, it stimulates his or her desire to participate in competition. In addition, displaying the position of a player within a large group of players stimulates the player's desire to participate in the competition and to improve his or her skills. In recent years, the connection of game terminals via a network has enabled every player to know his or her own national or international standing, which is based on his or her score.

Presently, a ranking is generally displayed that indicates the position of a player's game results nationally or within a facility such as a game arcade center. Based on this display, it is hoped that each player will actively participate in competition with an aim to improve his or her rank. However, aside from the few outstanding players, average or below average players might instead lose their desire to participate in the competition because of the absolute evaluation of game results. If only above average players occupy the upper ranks, then the ranking system, which is supposed to stimulate desire to participate in the competition, ends up having the reverse effect in that it dulls the interest of numerous other players. On the other hand, if even unskilled players can easily improve their rank, it will dull the interest of the highly skilled players to participate in the competition.

In addition, some conventional ranking displays that are output after a game is over stimulate the desire of players to improve their skills, while others weakly stimulate their desire to continue to play in the competition. In other words, the ranking display is nothing more than an indication of the absolute evaluation of the player based on his or her game results, and does not inspire interest in the game after a game is over.

Accordingly, it is an object of the present invention to provide a game results evaluating method that uses the game results to instill a desire in every player to participate in the next competition after a game is over.

### Disclosure of the Invention

To solve the abovementioned problems, a first aspect of the invention provides a game results evaluating method that tabulates game results obtained by a plurality of players who play a game, and evaluates those tabulated results. This method includes the following steps:

A: a rank setting step that sets L prescribed ranks;
B: an initial rank determining step that assigns the plurality of players to any one of the L ranks;
C: a team organizing step that organizes a plurality of teams, each of which includes at least one player, in each rank wherein players are assigned by the abovementioned initial rank determining step;
D: a team results calculating step that calculates a cumulative value of the game results of the game that was played by each player assigned to each team during a prescribed time period, and calculates the results of each team during the time period based on the calculated cumulative value of the game results of each player;
E: a rank re-determining step that uses the current ranks of each team as a reference to determine whether to rank up, rank down, or maintain the rank of each team based on its results, and redetermines the rank of each team and the rank of each player assigned to each team based on that determination; and
F: a team reorganizing step that dissolves all of the teams in each rank wherein a team exists, and, based on the rank of each player that was re-determined by the rank re-determining step, reorganizes the players into a plurality of teams, wherein each team includes at least one player, for each rank wherein a player exists.

For example, let us consider a case wherein the prescribed time period is one month and the ranks are in three stages: A, B, and C. First, all players are assigned to any rank, e.g., the B rank, and, for example, three teams T1, T2, T3 are organized. Based on the results after the lapse of the first month, the ranks of the three teams are updated. As a result of the update, team T1 and its players are assigned to the A rank, team T2 and its players are assigned to the B rank, and team T3 and its players are assigned to the C rank. After the updating of the ranks, the teams T1-T3 that were formed in the month that elapsed are dissolved. Furthermore, a plurality of teams for the next month is reorganized in each of the ranks A, B, C. When the next month elapses, the ranks of the teams and of the players in each of the ranks A, B, C are updated. After the updating of the ranks, the old teams are dissolved and new teams are reorganized in each rank.

With this type of game results evaluating method, the results of the entire team can lead to an increase in the level of the team and, consequently, an increase in the level of the players who are members of that team. Even if we assume that there are strengths and weaknesses in the abilities of the team members, there is a possibility that even the weak team members will be able to increase their rank to one that is above their natural abilities as a result of the contributions that the strong team members make to the team. Consequently, the desire to participate in the competition can be increased even for players that are somewhat unskilled. Moreover, highly skilled players advance and therefore participate in the competition in order to lead their team to increase their rank, as well as to increase their rank themselves.

As a result, in one kind of multiplayer competition that is called team competition, skilled players assist unskilled players, which makes it possible to stimulate a desire in the unskilled players to participate in the competition. In addition, instilling a spirit of mutual support through team competition makes it possible to encourage a sense of responsibility in the skilled players and to motivate them.

A second aspect of the invention provides a game results evaluating method according to the first aspect of the invention, further comprising a repeating step that repetitively performs the team results calculating step (D), the rank re-determining step (E), and the team reorganizing step (F) with every lapse of the prescribed time period.

With every lapse of the prescribed time period, e.g., every month, all player ranks are reviewed and the teams are reorganized. In other words, after one month from the redetermination of the ranks and the reorganization of the teams has elapsed, the teams' results are evaluated, and once again the ranks are redetermined and the teams are reorganized based on that evaluation. This is performed repetitively. The reorganization of teams may be performed randomly or may be performed so that the ability of each team balances out. Reorganization may be performed in accordance with the game results of the players. The higher the rank, the smaller the number of people on each team, which increases the effect that the level of contribution made by each player to his or her team has on the team results. As a result, unskilled players are sifted out gradually and only the true power players increase rank.

Accordingly, in one kind of multiplayer competition that is called team competition, it is possible to stimulate a desire in the unskilled players to participate in the competition, and, because only true power players increase rank, to instill a desire in the skilled players to participate in the competition.

A third aspect of the invention provides a game results evaluating method according to the first or second aspects of the invention, wherein a plurality of teams are created in each rank wherein a player exists based on the cumulative value of the game results of each player during a prescribed time period. The game results of each player during the prescribed time period are calculated in the team reorganizing step.

For example, N teams can be organized in each rank in accordance with the overall game scores of each player over the course of one month so that the average overall score of the N teams in each rank are substantially the same. In so doing, the abilities of the N teams in each rank become substantially equal, which enhances team competition and makes it possible to increase interest in multiplayer competition.

Conversely, N teams may be generated in order of their overall score. In this case, the strong players rapidly increase rank, which makes it possible to elicit a desire in strong players to participate in the competition.

A fourth aspect of the invention provides a game results evaluating method according to any one aspect of the first through third aspects of the invention, further comprising a storing step. The storing step stores, as points, the cumulative value of the game results of the game that was played by each player and the result of each team during the time period. This method has a team results calculating step that displays the result of each team during the time period as points. In addition, this method further comprises a bonus managing step. This bonus managing step, after the end of a game played by an arbitrary player PT1 on a team T1, subtracts arbitrary points P from the results of team T2, which are stored in the storing step. Furthermore, the bonus managing step adds the points P to the game results cumulative value of the player PT1, which is stored in the storing step, and to the results of the team T1 to which that player is assigned.

By decreasing the points of team T2 and adding to the points of the players on team T1, the points of team T1 consequently also increase by the amount of points P. Accordingly, each player can enjoy the change in rivalry among the teams as a result of the transfer of points.

A fifth aspect of the invention provides a game results evaluating method according to the fourth aspect of the invention, wherein the bonus managing step maintains unaltered the game results cumulative value, which was stored in the storing step, of each player on the team T2.

Even though the points of team T2 decrease, the points of each player on team T2 do not decrease. In other words, although there are cases wherein points are transferred on a team unit basis, the points of each individual player depends on his or her game performance. Accordingly, each player can enjoy changes in rivalry between teams as a result of the transfer of points on a team unit basis, and can also aim to increase rank by improving his or her own performance.

A sixth aspect of the invention provides a game results evaluating method according to any one aspect of the first through fifth aspects of the invention, wherein the initial rank determining step assigns all of the plurality of players to the lowest rank of the L ranks. Here, the rank re-determining step accepts the joining of a new player after the start of the prescribed time period. Furthermore, the rank re-determining step allocates the new player to any team in the lowest rank.

Everyone is initially placed in any one of the teams in the lowest rank. Even players who join the present game results evaluating method midway are placed on any one of the teams in the lowest rank. From there, an increase in rank is available in accordance with the result of each team and the game results of each individual. Accordingly, there is a feeling of fairness about the competition, and therefore the players do not lose their desire to participate in the competition nor their competitive spirit.

A seventh aspect of the invention provides a game results evaluating method according any one aspect of the first through sixth aspects of the invention, further comprising a displaying step. The displaying step displays the results of each team and/or the standing within the team of each player midway through the prescribed time period.

Displaying the ongoing progress of the competition between teams makes it possible to stimulate a sense of rivalry among the teams and to increase the players' desire to participate in the competition. In addition, displaying a player's standing within the team makes it possible to cause the player to recognize that he or she is being personally evaluated, thus further increasing his or her desire to participate in the competition.

An eighth aspect of the invention provides a game results evaluating method according to the seventh aspect of the invention, wherein every time the game results of an arbitrary player are output, the displaying step displays the change in that player's team results.

Around the time that a game is over, the display of the extent to which a player contributed to the results of the team him or herself makes it possible to instill a desire in the player to continue to participate in the competition.

A ninth aspect of the invention provides a game results evaluating apparatus that tabulates game results obtained by a plurality of players who play a game, and evaluates those tabulated results. This apparatus comprises the following means.

A: rank setting means that sets L prescribed ranks;
B: initial rank determining means that assigns the plurality of players to any one of the L ranks;
C: team organizing means that organizes a plurality of teams, each of which includes at least one player, in each rank wherein players are assigned by the abovementioned initial rank determining means;
D: team results calculating means that calculates a cumulative value of the game results of the game that was played by each player assigned to each team during a prescribed time period, and calculates the results of each team during the time period based on the calculated cumulative value of the game results of each player;
E: rank re-determining means that uses the current ranks of each team as a reference to determine whether to rank up, rank down, or maintain the rank of each team based on its results, and redetermines the rank of each team and the rank of each player assigned to each team based on that determination; and
F: team reorganizing means that dissolves all of the teams in each rank wherein a team exists, and, based on the rank of each player that was re-determined by the rank re-determining means, reorganizes the players into a plurality of teams, wherein each team includes at least one player, for each rank wherein a player exists.

This apparatus accomplishes the same operational effects as the first aspect of the invention.

A tenth aspect of the invention provides a game results evaluating program that tabulates game results, which are obtained by a plurality of players who play a game, and evaluates those tabulated results. This program causes a computer to function as the following means.

A: rank setting means that sets L prescribed ranks;
B: initial rank determining means that assigns the plurality of players to any one of the L ranks;
C: team organizing means that organizes a plurality of teams, each of which includes at least one player, in each rank wherein players are assigned by the abovementioned initial rank determining means;
D: team results calculating means that calculates a cumulative value of the game results of the game that was played by each player assigned to each team during a prescribed time period, and calculates the results of each team during the time period based on the calculated cumulative value of the game results of each player;
E: rank re-determining means that uses the current ranks of each team as a reference to determine whether to rank up, rank down, or maintain the rank of each team based on its results, and redetermines the rank of each team and the rank of each player assigned to each team based on that determination; and
F: team reorganizing means that dissolves all of the teams in each rank wherein a team exists, and, based on the rank of each player that was re-determined by the rank re-determining means, reorganizes the players into a plurality of teams, wherein each team includes at least one player, for each rank wherein a player exists.

This program accomplishes the same operational effects as the first aspect of the invention.

According to the present invention, after a game is over, it is possible to instill a desire in players to participate in the next competition by using the scores acquired by playing a game. In addition, players can develop an interest in interteam multiplayer competition and in individual competition.

### Brief Description of the Drawings

FIG. 1 is a diagram that explains the generation of teams and the updating of ranks. Drawing (a) shows the initial state for the case wherein rank S to rank CIII are set. Drawing (b) shows the distribution state of players after a prescribed time period T has elapsed from the initial state.
FIG. 2 is an explanatory diagram that shows the entire configuration of a game system according to the first embodiment.
FIG. 3 is a block diagram of a game terminal apparatus.
FIG. 4 is an external oblique view of a music game apparatus, which is one embodiment of the game terminal apparatus.
FIG. 5 is an enlarged view of a guitar controller.
FIG. 6 is one example of a screen that is displayed on a monitor.
FIG. 7 is an explanatory diagram that shows the functional configuration of a CPU of a center server.
FIG. 8 is an explanatory diagram that shows the functional configuration of a CPU of the game terminal apparatus.
FIG. 9 is a conceptual explanatory diagram of personal data (a) and team data (b).
FIG. 10 is a conceptual explanatory diagram of re-determining ranks for a case wherein the initialized ranks are first updated (a), and team reorganization after the ranks have been re-determined (b).
FIG. 11 is a conceptual explanatory diagram of re-determining rank when the prescribed time period T has elapsed from the previous rank re-determination (a), and team reorganization after this rank re-determination (b).
FIG. 12 is an explanatory diagram that shows a personal data overwriting method that is performed by a rank determining means and a team organizing means.
FIG. 13 includes explanatory diagrams that show how the rank determining means and the team organizing means change the personal data in a buffer.
FIG. 14 is a screenshot of the status of interteam multiplayer competition that is displayed by the game terminal apparatus.
FIG. 15 is an explanatory diagram that shows one example of the flow of a process between the center server and a game terminal apparatus.
FIG. 16 is a flow chart that shows one example of the flow of a team organizing process.

### Detailed Description of the Preferred Embodiments

### <Overview of the Invention>

With the game results evaluating method according to the present invention, a plurality of ranks are set for players who play a game and a plurality of teams are organized for each rank, wherein each team comprises at least one player. Teams within a rank engage in interteam multiplayer competition. The rank of each team and player is updated based on the results of the multiplayer competition. The team results, which form the basis for deciding the results of the multiplayer competition, are a cumulation of the game results of the players on the team. The determination of the team results and the updating of ranks are performed with every lapse of a prescribed time period T, e.g., once a month. When the prescribed time period T elapses, the ranks of all players are updated and all teams are reorganized.

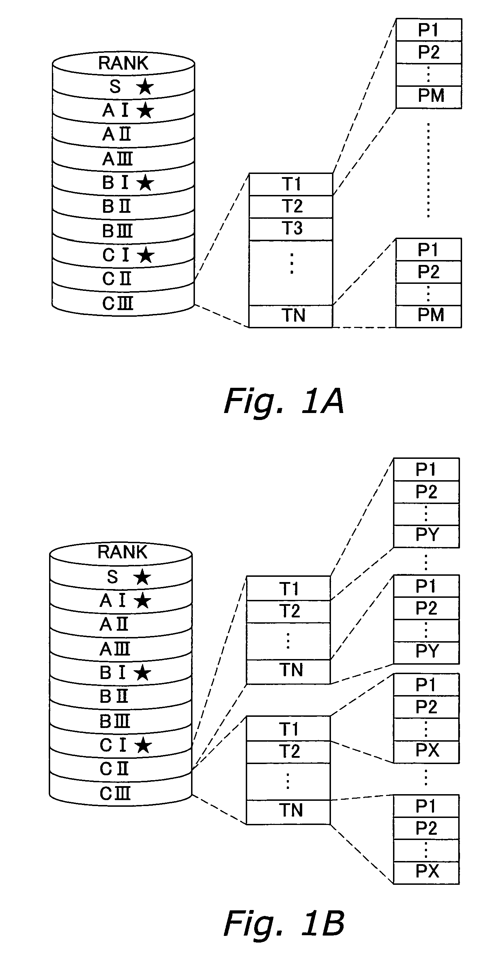

FIG. 1(a) shows the initial state for a case wherein rank S through rank CIII are set. The initial state is the state before interteam multiplayer competition starts. In the initial state, all players are assigned to the lowest rank, i.e., rank CIII. In rank CIII, the players are organized into N teams T1, T2,..., TN. Each team comprises M players.

FIG. 1(b) shows the distribution state of the players after the lapse of the prescribed time period T from the initial state. Based on the results of each team, some of the players in rank CIII increase their rank by one rank to rank CII. In this state, the old teams are dissolved and the players in each of the ranks CII, CIII are reorganized into a plurality of teams. In this figure, N teams are reorganized in each rank. Each team in rank CII comprises Y players, and each team in rank CIII comprises X players.

With this method, the results of the entire team leads to an increase in the level of the team and, consequently, an increase in the level of the players who are members of that team. Even if we assume that there are strengths and weaknesses in the abilities of the players, there is a possibility that even the weak players will be able to increase rank to a rank that is above their natural abilities as a result of the contributions that the strong players make to the team. Consequently, the desire to participate in the competition can be increased even for players that do not have a lot of skill. Moreover, highly skilled players advance and therefore participate in competition in order to lead their team to increase rank, as well as to increase rank themselves.

In other words, in one kind of multiplayer competition that is called team competition, skilled players assist unskilled players, which makes it possible to stimulate a desire in the unskilled players to participate in the competition. In addition, instilling a spirit of mutual support through team competition makes it possible to encourage a sense of responsibility in the skilled players and to motivate them.

### <First Embodiment>

### (1) Configuration of a Game System According to the Present Embodiment

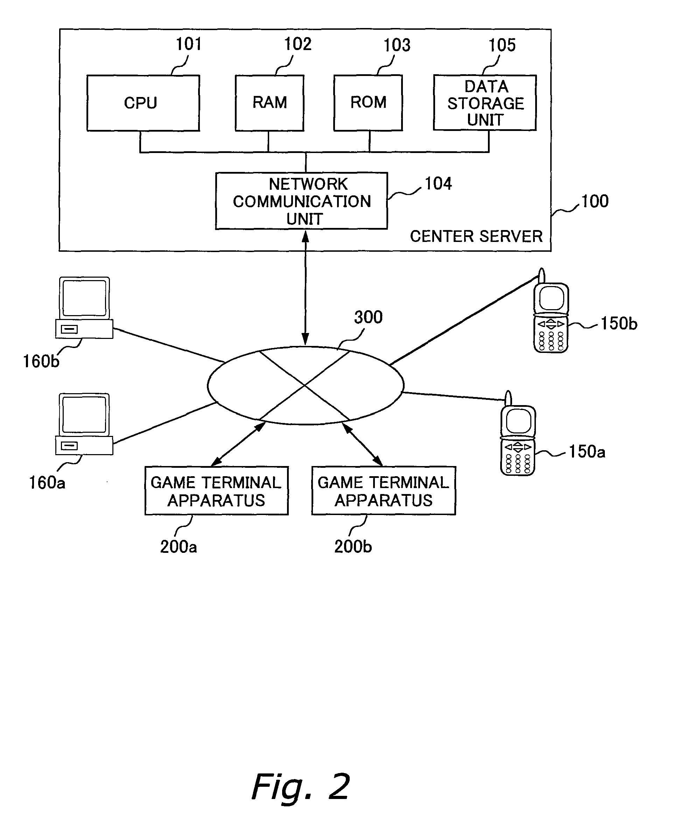

FIG. 2 is an explanatory diagram that shows the entire configuration of the game system according to the first embodiment of the present invention. This game system comprises a center server 100 and a plurality of game terminal apparatuses 200a, 200b,.... The game system may further comprise, for example, mobile telephones 150a, 150b,... and personal computers 160a, 160b,.... The game terminal apparatuses 200, mobile telephones 150, and personal computers 160 are connected to the center server 100 via a network 300 such as the Internet.\

### (1-1) Center Server

The center server 100 stores personal data for each player and team data for each team and, in response to a request from one of the game terminal apparatuses 200, sends personal data and team data to the requester. The center server 100 comprises the following elements (a)-(e):
(a) CPU 101: implements a plurality of functions, which are discussed later, based on, for example, a control program that is stored in ROM 103 or RAM 102;
(b) RAM 102: temporarily stores, for example, the control program, personal data, and team data;
(c) ROM 103: stores, for example, the control program;
(d) network communication unit 104: sends and receives data among the game terminal apparatuses 200, mobile telephones 150, and personal computers 160 via the network 300; and
(e) data storage unit 105: accumulates personal data, such as the game results of each player, and team data, which are sent from the game terminal apparatuses 200. Examples of personal data include authentication information such as a player ID and a password; an assigned rank ID; an assigned team ID; a cumulative value of the game results; and skill points, which indicate the player's skill level. Examples of team data include the assigned rank ID and the team results.

### (1-2) Game Terminal Apparatus

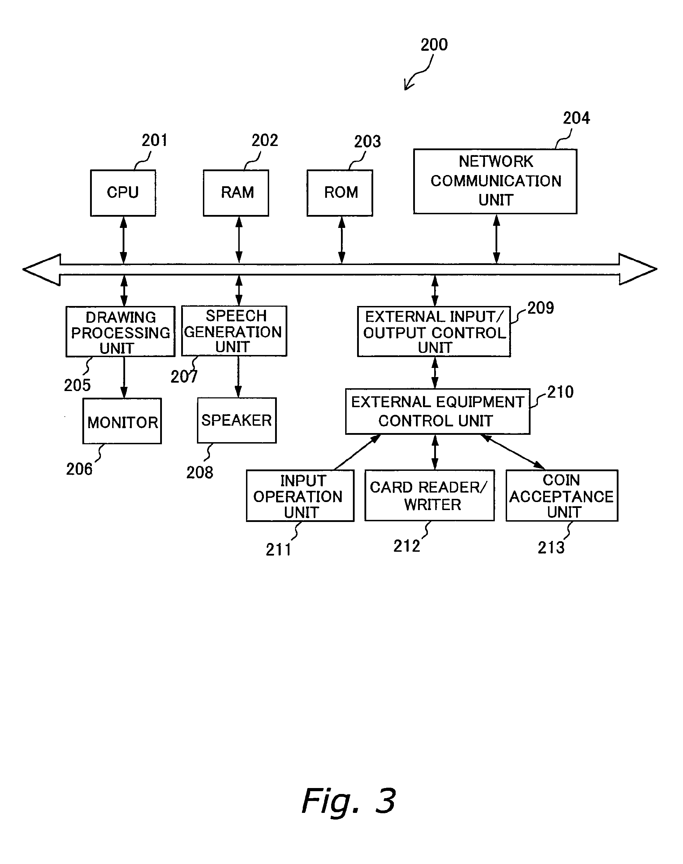

FIG. 3 is one example of the configuration of one game terminal apparatus 200. The game terminal apparatus 200 acquires display data needed to display the team results from the center server 100. The results or the ongoing progress of interteam multiplayer competition is displayed based on the acquired data. The game terminal apparatus 200 comprises the following elements (a)-(m):
(a) CPU 201: implements a plurality of functions, which are discussed later, based on, for example, a control program, which is stored in ROM 203 (discussed later), and game data, which is stored in RAM 202 (discussed later);
(b) RAM 202: temporarily stores various game data such as various variables and parameters;
(c) ROM 203: stores, for example, the control program, various parameters, and the shapes of display areas, which represent the relative superiority of the results of each team;
(d) network communication unit 204: sends and receives data via the network 300 to and from the center server 100 and receives, for example, team data and personal data;
(e) monitor 206: displays, for example, a game image, the players' game results, and the relative superiority of teams;
(f) drawing processing unit 205: generates image data, which is displayed on the monitor 206;
(g) speaker 208: outputs sound, such as sound effects, during game execution, during demo screen display, and when displaying the game results and the like;
(h) speech generation unit 207: generates sound data, which is output to the speaker 208;
(i) input operation unit 211: a guitar controller, the shape of which simulates a guitar in the present embodiment; may also comprise, for example, a joy stick or an operation button; also receives the input of a player's instructions;
(j) card reader/writer 212: reads data, such as the player ID, from an inserted magnetic card, and executes a game results writing process as needed;
(k) coin acceptance unit 213: receives credit by means of inserted coins;
(l) external equipment control unit 210: controls external equipment such as the input operation unit 211, the card reader/writer 212, and the coin acceptance unit 213; and
(m)extemal input/output control unit 209: generates control signals for the external equipment such as the input operation unit 211, the card reader/writer 212, and the coin acceptance unit 213; also receives detection signals from the external equipment and sends such to the CPU 201.

### (2) One Example of the Game Terminal Apparatus

### (2-1) Configuration of the Game Terminal Apparatus

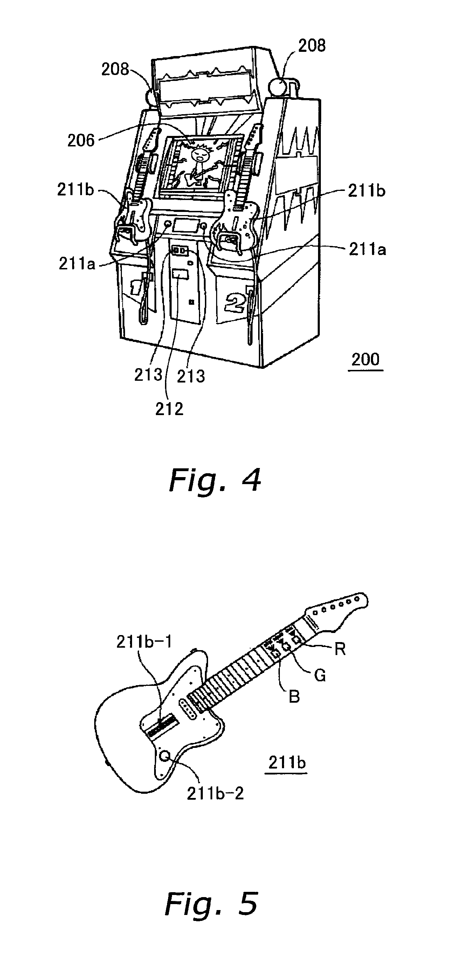

FIG. 4 is an external oblique view of a music game apparatus, which is one embodiment of the abovementioned game terminal apparatus 200. The music game apparatus is provided with the monitor 206 at the front surface of its casing. Input operation units 211 a, such as start buttons, are provided at the left and right sides of the lower part of the monitor 206, respectively, and two coin acceptance units 213 are provided on the left and right sides therebelow, respectively. Furthermore, the card reader/writer 212 is provided at the lower part of the coin acceptance units 213. In addition, two simulated musical instruments, i.e., guitar controllers 211b, which function as the input operation units 211 whereto the players input their rhythm sound, are mounted on the left and right sides of the monitor 206, respectively. Furthermore, two speakers 208, which output performance effects for the song being played, are provided and disposed at the upper part of the casing of the monitor 206. The provision of two guitar controllers 211b in parallel makes it possible for two players to operate them and play a music game.

FIG. 5 is an enlarged view of a guitar controller. The guitar controller 211b comprises three types of neck buttons R, G, and B, which are used to select the type of the rhythm sound. In addition, the guitar controller 211b comprises a pick inputting means 211b-1, which determines when the rhythm sound that was selected by at least one of the neck buttons is output. Furthermore, the guitar controller 211 b comprises a switch 211b-2, which is provided and disposed below the pick inputting means 211b-1, that switches the output mode of the rhythm sound.

### (2-2) Music Game Execution

The game terminal apparatus 200 configured as described above plays a game as follows in accordance with the control program that is stored in the ROM 203. A player inserts his or her magnetic card in the card reader/writer 212 of the game terminal apparatus 200 and inserts a coin in one of the coin acceptance units 213. The game terminal apparatus 200 reads the player ID, which identifies the player, from the magnetic card that was inserted in the card reader/writer 212 and requests the input of a password. The input password is compared with data in the center server 100 and the individual is thereby authenticated. If the CPU 201 receives the input of the start button, which was operated by the player, then it executes the control program and starts the game.

### (2-3) Overview of the Music Game

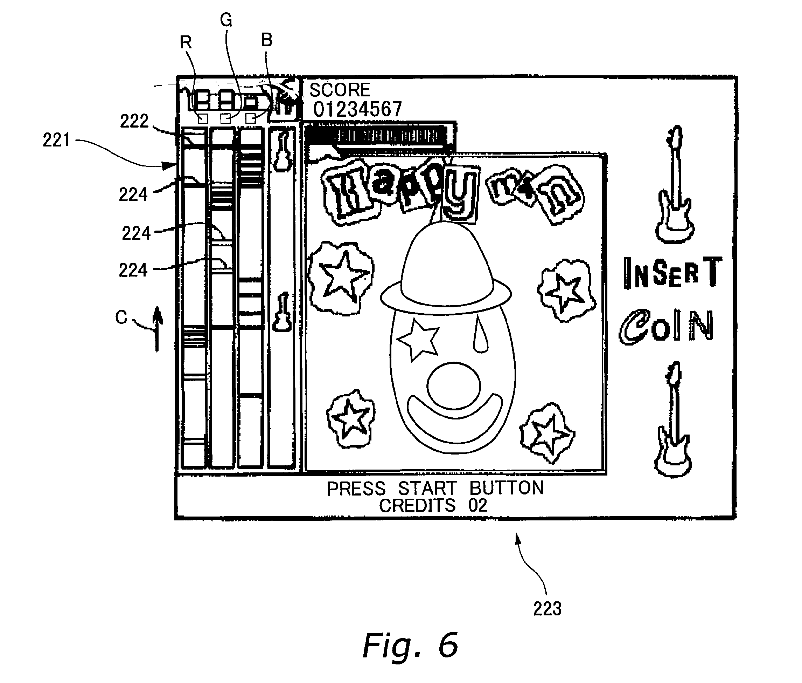

The following explains an overview of the music game executed by the game terminal apparatus 200, referencing FIG. 4 through FIG. 6. FIG. 6 is one example of a screen 223 that is displayed on the monitor 206. As shown in FIG 6, with this game, notes 224, which indicate the operation timing for each rhythm sound that corresponds to each song played (background music; BGM), are displayed on a notes display unit 221 for each rhythm sound. For each rhythm sound, the notes 224 independently and sequentially move in a direction (along the direction of the C arrow in FIG. 6) toward a reference line 222 of the notes display unit 221 in accordance with the advance of each song played. The point in time when a note 224 coincides with the respective reference line 222 is the operation timing, i.e., the time at which the player should operate the pick inputting means 211b-1. While verifying the positions of the notes 224, the player operates the neck buttons R, G, B with one hand in accordance with the rhythm sound of the BGM, and operates the pick inputting means 211b-1 and the switch 211b-2 with the other hand, and thereby inputs operation signals. The CPU 201 monitors for the occurrence of any deviation between the operation timing and the operation signal input timing. The CPU 201 displays "perfect," "great," "good," or "miss" on the notes screen 223 in accordance with the magnitude of the deviation. In addition, the CPU 201 calculates the game points in accordance with the frequency of "miss" occurrences. Furthermore, the CPU 201 may calculate special points (hereinbelow, referred to as bonus points) in accordance with the number of "perfect" occurrences. After the game is over, the CPU 201 displays the game points obtained by each player on the monitor 206. In addition, the CPU 201 sends a game over notification, which includes an instruction to transfer, for example, game points and bonus points, to the center server 100 along with the player ID.

### (3) Evaluation of Game Results

The following explains the evaluation of game results for a case wherein the present invention has been adapted to the music game discussed above.

### (3-1) Functional Configuration of Center Server and Game Terminal Apparatus

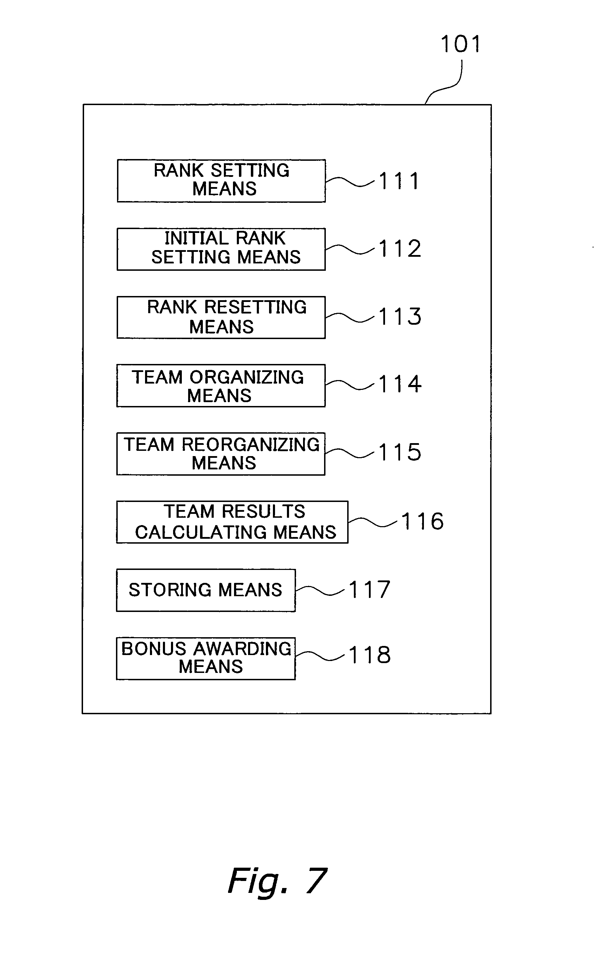

FIG. 7 is an explanatory diagram that shows the functional configuration of the CPU 101 of the center server 100. The CPU 101 comprises a rank setting means 111 (corresponds to a rank setting step), an initial rank determining means 112 (corresponds to an initial rank determining step), a rank re-determining means 113 (corresponds to a rank re-determining step), a team organizing means 114 (corresponds to a team organizing means step), a team reorganizing means 115 (corresponds to a team reorganizing step), a team results calculating means 116 (corresponds to a team results calculating step), and a storing means 117 (corresponds to a storing step), and more preferably comprises a bonus managing means 118 (corresponds to a bonus managing step).

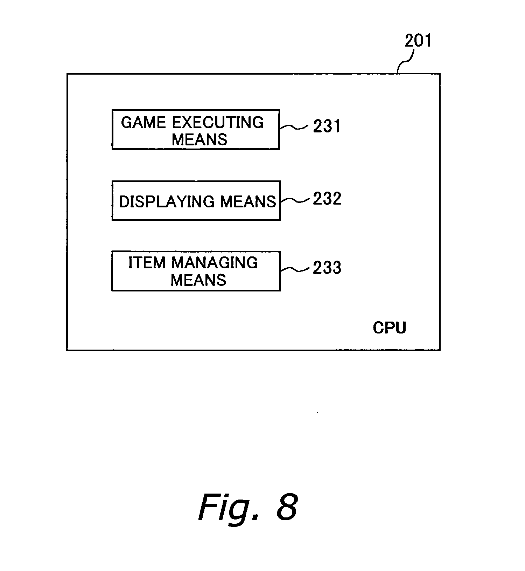

FIG. 8 is an explanatory diagram that shows the functional configuration of the CPU 201 of the game terminal apparatus 200. The CPU 201 comprises a game executing means 231 and a displaying means 232. The CPU 201 preferably comprises an item managing means 233.

### (3-2) Functions of Each Means Provided to the Center Server

### (3-2-1) Storing Means

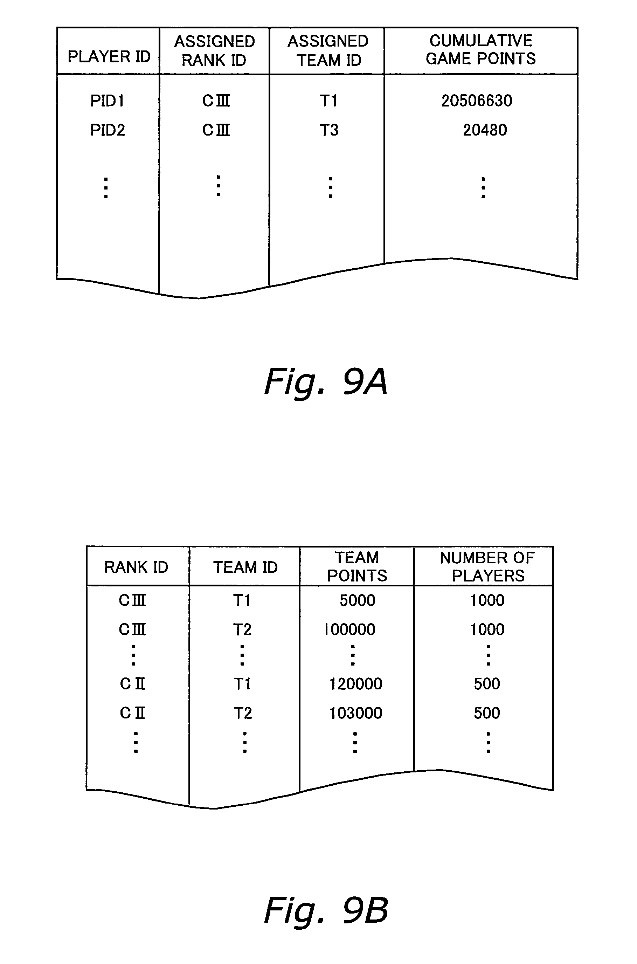

The storing means 117 stores personal data and team data. FIG. 9(a) is a conceptual explanatory diagram of stored personal data. Personal data includes the game points cumulative value (hereinbelow, referred to as cumulative game points) obtained by each player during a prescribed time period T (e.g., one month). In the present example, one record of personal data includes a player ID, an assigned rank ID, an assigned team ID, and cumulative game points (and can additionally include, for example, an assigned area and an e-mail address). A player ID is an identifier that specifies a player who is registered in the center server 100. An assigned rank ID is an ID of the rank to which the player is assigned (for details, refer to section 3-2-2, which is discussed later). An assigned team ID is an ID of the team to which the player is assigned. A team ID is an identifier that specifies a team in a rank (for details, refer to 3-2-3, which is discussed later).

FIG. 9(b) is a conceptual explanatory diagram of team data that is stored in the storing means 117. Team data comprises at least the results of each team at an arbitrary point in time during the prescribed time period T. In the present example, the team results indicate the sum points of the cumulative game points of all the players that are assigned to each team. Hereinbelow, the team results are referred to as the team points. In the present embodiment, one record of team data includes a rank ID, a team ID, team points, and the number of players.

### (3-2-2) Rank Setting Means

The rank setting means 111 sets L prescribed ranks (where L ≥ 2 and is an integer). More specifically, the rank setting means 111 stores the rank IDs that identify the ranks. In the present embodiment, let us consider a case wherein ten ranks are set. Each rank is identified by a rank ID, which in rank order from high to low are S, AI, All, AIII, BI, BII, BIII, CI, CII, CIII.

### (3-2-3) Initial Rank Determining Means

The initial rank determining means 112 assigns each of a plurality of players to any one of the abovementioned ten ranks.

The initial rank determining means 112 assigns all players to the lowest rank CIII of the abovementioned ten ranks in the initial state. In addition, the initial rank determining means 112 accepts the participation of new players during the course of the prescribed time period T and assigns them to any one of the teams in the lowest rank CIII. Namely, everyone is initially placed in any one of the teams in the lowest rank CIII. Even players who join a game being played on the present game system midway are placed in any one of the teams in the lowest rank CIII. The road upward from the lowest rank CIII is provided in accordance with the team results as well as the game results of each individual. Accordingly, there is a sense of fairness about the competition, and the players do not lose their desire to participate in the competition nor their competitive spirit.

### (3-2-4) Rank Re-determining Means

The rank re-determining means 113 updates the team ranks and the ranks of the players that are assigned to each team. This function is executed by rewriting personal data in the data storage unit 105. The rewriting of personal data is summarized and explained in (3-2-*6) Team Reorganizing Means.*

Once the initial rank determining means 112 has determined all player ranks, the rank re-determining means 113 updates the player ranks with every lapse of the prescribed time period T. Specifically, using the current rank of each team as a reference, the rank re-determining means 113 determines whether to increase rank, decrease rank, or maintain rank for each player based on his or her team's points. Furthermore, the rank re-determining means 113 re-determines the rank of each player that is assigned to each team based on the abovementioned determination.

Ranks can be updated, for example, based on team standings, which are determined based on the points of teams in the same rank. Specifically, for example, the players that are assigned to the upper ranked teams are ranked up, the players that are assigned to the lower ranked teams are ranked down, and the ranks of players that are assigned to the other teams are maintained unaltered. To simplify the explanation in the present embodiment, the players on the first place team in each rank will increase rank by one rank, the players on the last place team in each rank will decrease rank by one rank, and the players on the other teams in each rank will maintain their rank.

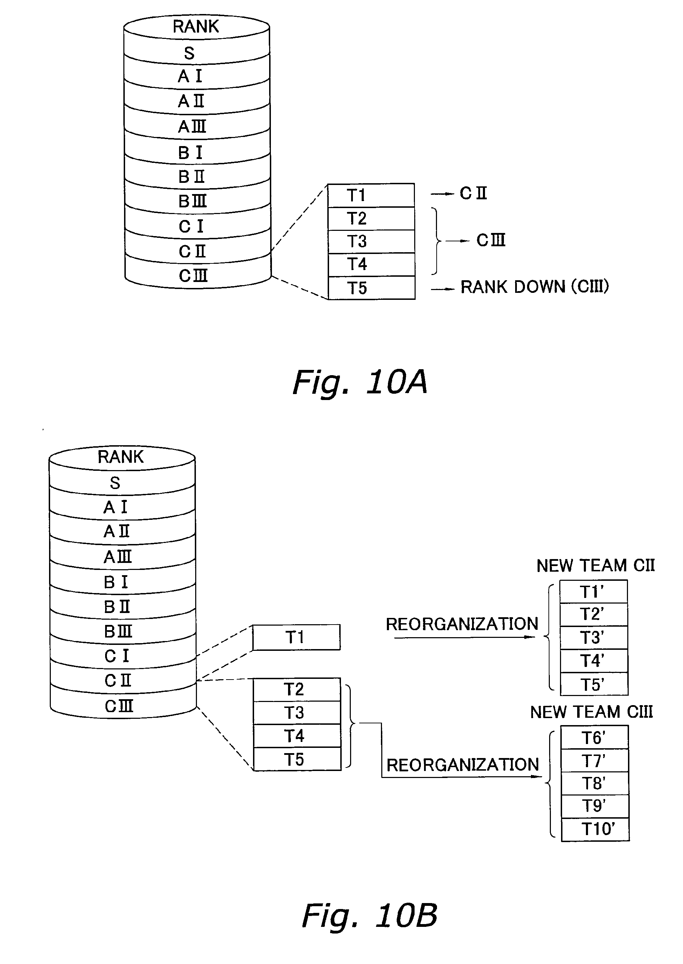

FIG. 10(a) is a conceptual explanatory diagram of rank re-determination. This figure shows a case wherein ranks that were initially set by the initial rank determining means 112 are updated for the first time by the rank re-determining means 113. FIG. 10(a) shows that all players are assigned to the lowest rank CIII. In the present example, all players are organized into five teams T1-T5. Here, it is a given that team standings, which are based on team points after the prescribed time period T elapses, were, in order from first to fifth place, T1, T2, T3, T4, and T5. In the present case, the rank re-determining means 113 ranks up, for example, the players on the first place team T1 to rank CII. However, the players on the remaining teams T2-T4 stay in their current rank CIII. Furthermore, if an attempt is made to decrease the rank of the players on the fifth place team T5, they remain in their current rank CIII because their current rank is already the lowest rank. Subsequently, as shown in FIG. 10(b), five teams T1'-T5' are newly organized in rank CII and five teams T6'-T10' are newly organized in rank CIII. The organization of teams is discussed later in detail.

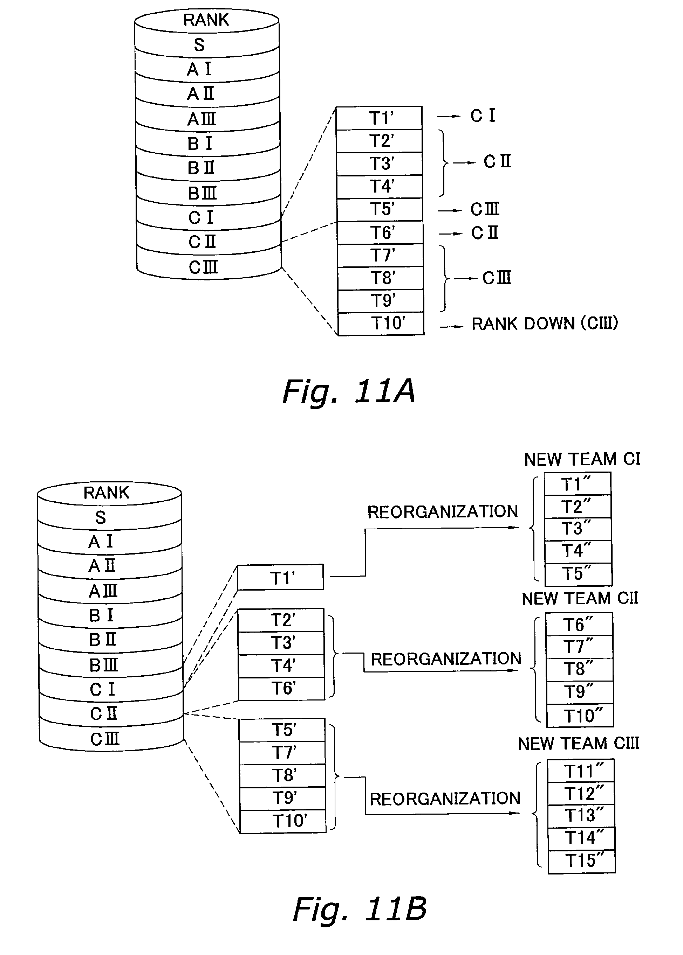

FIG. 11 (a) is a conceptual explanatory diagram of rank re-determination when the prescribed time period T has elapsed from the previous rank re-determination. Here, based on team points after the prescribed time period T has elapsed, the team standings are, in order from first to fifth place, T1', T2', T3', T4', T5' in rank CII and T6', T7', T8', T9', T10' in rank CIII. In each rank, the ranks of players that are assigned to the first place team and the fifth place team change, while the ranks of the players on the second place through fourth place teams stay the same. As a result, the players on team T1' are assigned to rank CI. In addition, the players on teams T2'-T4' and T6' are assigned to rank CII. The players on teams T5' and T7'-T10' are assigned to rank CIII. Thereafter, as shown in FIG. 11(b), five teams T1"-T5" are newly organized in rank CI, five teams T6"-T10" are newly organized in rank CII, and five teams T11"-T15" are newly organized in rank CIII. The organization of teams is discussed in detail later.

The method of updating ranks is not limited to the example recited herein. For example, it is possible to increase the rank of the first place team by two ranks, increase the rank of the second place team by one rank, maintain the ranks of the third place team unaltered, decrease the rank of the fourth place team by one rank, and decrease the rank of the fifth place team by two ranks. In addition, it is also possible to update ranks based on the variation among the teams' points instead of the standings in each rank.

### (3-2-5) Team Organizing Means

The team organizing means 114 organizes teams based on player ranks that were determined by the initial rank determining means 112. More specifically, the initial rank determining means 112 assigns all players to the lowest rank in the initial state, after which the team organizing means 114 organizes a plurality of teams, each of which includes at least one player, in the lowest rank CIII. The abovementioned FIG. 10(a) shows that the team organizing means 114 organizes the players of the lowest rank CIII into a prescribed number of teams, which is five teams herein.

In the initial state, the method of grouping players is, for example, as follows. Teams are organized by combining the player IDs based on, for example, the player ID that was read from the magnetic card inserted by each player. Thus, players are combined arbitrarily to create the teams, which makes it possible to create strengths and weaknesses among teams. If there are multiple types of magnetic cards, then the players may also be divided into teams by magnetic card type.

### (3-2-6) Team Reorganizing Means

A team reorganizing means 115 reorganizes teams that comprise players based on player ranks, which were updated by the rank re-determining means 113. This function rewrites the personal data and the team data in the data storage unit 105.

Specifically, the team reorganizing means 115 reorganizes a plurality of teams for each rank that has players at every lapse of the prescribed time period T. The number of teams in each rank may all be the same or they may differ. With every lapse of the prescribed time period T, teams are reorganized after the rank re-determining means 113 has updated all player ranks. Reorganized teams include at least one player. Before reorganizing the teams, the team reorganizing means 115 dissolves all teams in each rank that has players. In other words, all teams from the previous prescribed time period T are dissolved in each rank. Thereafter, the team reorganizing means 115 reorganizes the teams based on the new ranks of the players, which were determined by the rank re-determining means 113. The number of teams in each rank is decided in advance. To simplify the explanation, the present embodiment takes up an example of a case wherein five teams are organized in each rank. Of course, the number of teams may vary by rank.

The abovementioned FIG. 10(b) and FIG. 11(b) are conceptual explanatory diagrams that show the reorganization of teams by the team reorganizing means 115 after the ranks have been updated. FIG 10(b) shows that the players on the old team T1 that are ranked up to rank CII are reorganized into five new teams Tl'-T5'. In addition, the players on the remaining old teams T2-T5 in rank CIII are reorganized into five new teams T6'-T10'. Likewise, FIG 11(b) shows that the players on the old team T1' that are ranked up to rank CI are reorganized into five new teams T1"-T5". In addition, the players on the old teams T2', T3', T4', T6' that are assigned to rank CII are reorganized into five new teams T6"-T10". Furthermore, the players on the old teams T5', T7'-T10' that are assigned to rank CIII are reorganized into five new teams T11"-T15".

One example of a method of grouping players when reorganizing teams is one that is based on the cumulative game points of each player when the prescribed time period T elapses. For example, new teams are organized so that the overall scores of the teams about to be organized are substantially the same within the same rank. Here, overall team scores can be calculated by the sum of the cumulative game points of the players on a team during the previous prescribed time period T. In so doing, the abilities of the teams in a rank become substantially equal, which enhances team competition and makes it possible to increase interest in multiplayer competition.

Conversely, teams may be generated by grouping the players in order of their cumulative game points from high to low. In this case, the strong players rapidly increase rank, which makes it possible to elicit a desire in strong players to participate in the competition.

### (Rewriting of Personal Data)

The rank re-determining means 113 and the team reorganizing means 115 rewrite personal data in the data storage unit 105. In other words, rank redetermination and team reorganization updates, for example, the assigned rank ID and the assigned team ID in the personal data of each player.

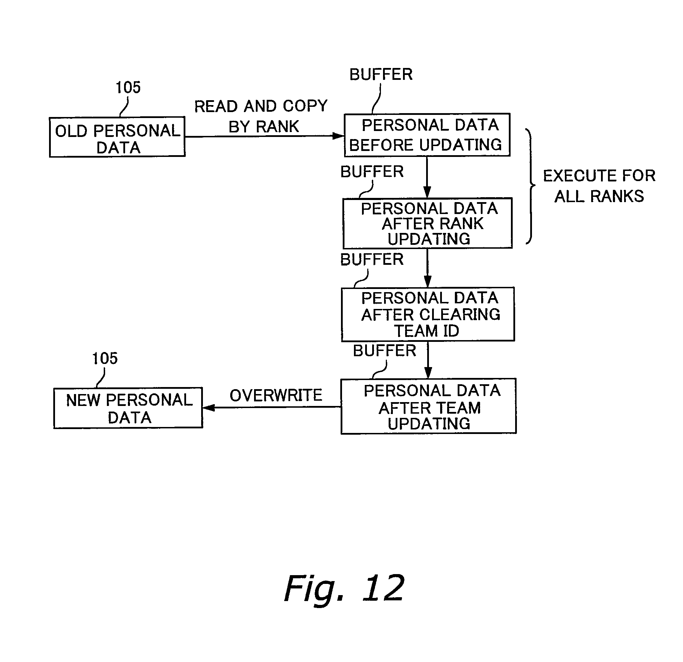

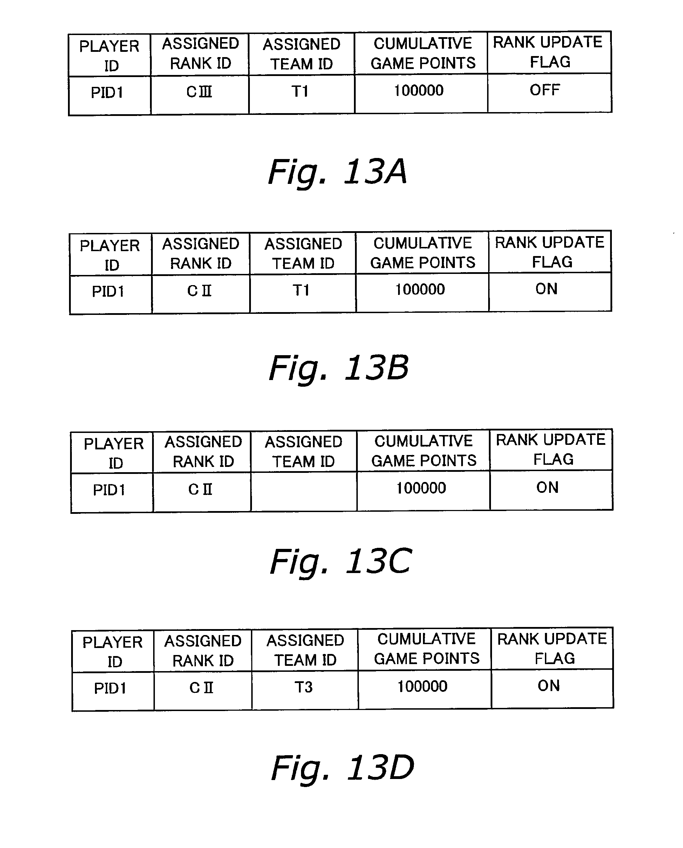

FIG. 12 and FIG. 13 are explanatory diagrams that show a method of rewriting the personal data in the data storage unit 105. A buffer is used for rewriting personal data. This is in order to prevent the intermixing of, for example, the assigned rank IDs and the assigned team IDs from the previously elapsed time period T with the newly determined assigned rank IDs and assigned team IDs. The buffer can be formed in, for example, RAM 102 of the center server 100.

As shown in FIG. 12, if the prescribed time period T elapses, then the rank re-determining means 113 sets one arbitrary rank as the rank to be processed, reads (at that point in time) the personal data (old personal data) assigned to that rank, and then copies such to the buffer. FIG. 13(a) is a conceptual explanatory diagram of the buffer contents wherein a copy of the old personal data and a rank update flag are stored. The rank update flag indicates that the rank is not updated if the flag is off, and is updated if the flag is on. To simplify the explanation, just one record is shown in the figure and the personal data of at least the players that are assigned to the rank to be processed is copied to the buffer.

Furthermore, the rank re-determining means 113 references team data and determines the standing of each team in each rank. Based on the determined team standings within each rank, the new ranks of the players on each team in the rank to be processed are determined. As shown in FIG. 12, the IDs of the newly determined ranks are written to the buffer. In addition, the rank update flag in the record wherein the newly assigned rank ID was written is updated to "on." FIG. 13(b) is one example of one record of personal data wherein the rank was updated.

The rank re-determining means 113 repeats the process of copying old personal data and rewriting the assigned rank ID in the buffer for each rank until the process has been performed for all ranks. Thereby, the buffer transitions to a state wherein the personal data of all players is copied to the buffer and, moreover, the assigned rank IDs in the personal data is updated for all players.

Subsequently, as shown in FIG. 12, the team reorganizing means 115 clears the assigned team ID in the buffer for all players. FIG. 13(c) shows the state wherein the assigned team IDs have been cleared from the buffer. Thereby, the teams from the previously elapsed prescribed time period T are dissolved.

Furthermore, as shown in FIG. 12, the team reorganizing means 115 organizes the players in each rank into a plurality of teams and writes newly assigned team IDs in the buffer. FIG. 13(d) shows the state wherein the newly assigned teams ID have been written to the buffer.

Lastly, as shown in FIG. 12, with the exception of the rank update flag, the team reorganizing means 115 overwrites the personal data in the data storage unit 105 with the data in the buffer. Thereby, the assigned rank ID and team ID in the personal data for each player are overwritten.

### (Overwriting of Team Data)

After overwriting the personal data, the team reorganizing means 115 updates the team data based on the updated personal data. Specifically, the team reorganizing means 115 5 references the updated personal data and extracts all rank IDs and team IDs. In addition, the team reorganizing means 115 calculates the number of players that are assigned to each team and each team's points by keying on the rank ID and the team ID. As shown in the abovementioned FIG. 9(b), the calculation results are associated with the rank IDs and the team IDs and stored as team data in the data storage unit 105.

### (3-2-7) Team Results Calculating Means

The team results calculating means 116 receives a game over notification from the game terminal apparatus 200 at an arbitrary point in time during the prescribed time period T, and updates the personal data. The game over notification comprises the player ID and the game points acquired by the player. Namely, keying on the received player ID, the team results calculating means 116 specifies the personal data record to be processed and adds the received game points to the cumulative game points in that record.

In addition, the team results calculating means 116 updates the team data based on the received game points. Namely, the team results calculating means 116 reads the rank ID and the team ID that correspond to the player ID from the personal data and specifies the record in the team data to be processed that includes such. The team points of the specified record are added to the received game points. Thereby, every time a player gets a game over notification, the game points acquired by the player are added to the team points of the team to which that player is assigned.

### (3-2-8) Bonus Managing Means

The bonus managing means 118 transfers team points between teams. Team points are transferred based on an instruction that is included in the game over notification from the game terminal apparatus 200. The game over notification may include, for example, the following type of instruction: "transfer 500 bonus points from team T3 with rank ID 'CIII' to team Tl." As discussed above, bonus points are calculated by the game terminal apparatus 200 during the game. If such an instruction is included, the bonus managing means 118 subtracts the bonus points from the team points of the specified team T3. In addition, the bonus managing means 118 adds the bonus points to the team points of the specified team TI. In this manner, points are transferred between teams, which makes it possible for each player to enjoy a change in the rivalry between teams as a result of the transfer of points.

In addition, the bonus managing means 118 may update personal data by adding bonus points to the cumulative game points of each player who played the game.

Furthermore, it is preferable that bonus points are not subtracted from the cumulative game points of the players on team T3 for which bonus points were already subtracted from the team points. Namely, even though the team points of team T3 are reduced, it is preferable not to reduce the cumulative game points of each player on team T3. In so doing, although there are cases wherein points are transferred on a team unit basis, the points of each individual player depends completely on his or her game performance. Accordingly, each player can enjoy changes in rivalry between teams as a result of the transfer of points on a team unit basis, and can also aim to increase rank by improving his or her own performance.

### (3-3) Function of Each Means Provided to the Game Terminal Apparatus

### (3-3-1) Game Executing Means

The game executing means 231 is provided to the game terminal apparatus 200. The game executing means 231 executes various games such as the abovementioned music game. Furthermore, when the execution of the music game ends, the game executing means 231 starts execution of the control program that displays the ongoing progress of the interteam multiplayer competition based on the game results.

### (3-3-2) Item Managing Means

In the present example, the item managing means 233 is provided to the game terminal apparatus 200, but can also be provided to the center server 100. The item managing means 233 allocates at least one item to one or more ranks. Furthermore, the item managing means 233 provides that item to the players that are assigned to that rank. In other words, the players that are assigned to that rank can acquire that item. Acquiring the item makes it possible for the player to, for example, receive the right to select and perform a bonus song, which is not one of the songs normally displayed on the game screen, or acquire a ring tone for a mobile telephone.

If a player has newly acquired an item due to, for example, the rank updating, then the item managing means 233 may provide notification of that information via the network communication unit 204 to, for example, the player's personal computer 160 or mobile telephone 150. The notified player is granted the authority to, for example, download the ring tone. Thereby, it is possible to increase the desire of the player who received the notification to participate in the game.

### (3-3-3) Displaying Means

The displaying means 232 is provided to the game terminal apparatus 200. When the displaying means 232 receives display data from the center server 100, which sent such in response to a game over notification, the displaying means 232 displays the team competition status. Namely, it displays, for example, the results of each team in each rank and each player's standing within his or her team. The display data that is received from the center server 100 includes, for example, the team points of each team in the rank that is the same as the rank of the player, each player's standing within the team, and the size of the team.

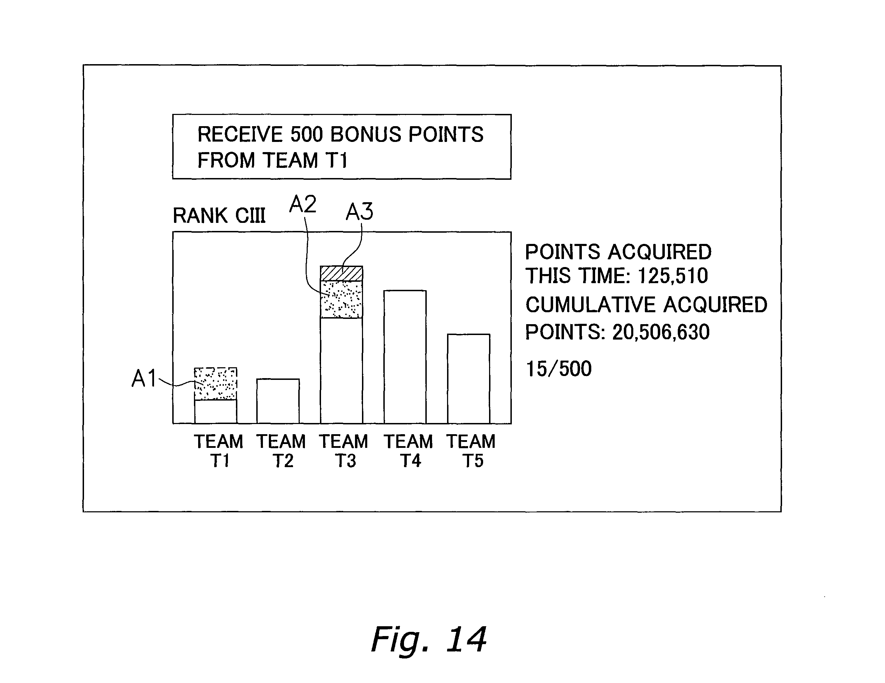

FIG. 14 is a screenshot that is displayed by the displaying means 232. In the present example, the differences in the team points of each of the five teams T1-T5 in rank CIII are displayed by a bar graph. In addition, the game points acquired by the players that are assigned to team T3 are displayed by area A3. Displaying the extent to which a player contributed to the results of the team him or herself around the time that the game is over makes it possible to instill a desire in the player to continue to participate in the competition. Furthermore, the bonus points that are added to the team points of team T3 are displayed by an area A2. Moreover, the bonus points that are subtracted from the team points of team T1 are displayed by an area A1. Thus, displaying the ongoing competition between teams within the same rank makes it possible to stimulate a sense of rivalry among the teams and to increase the player's desire to participate in the competition.

Furthermore, as was similarly discussed in (3-2-8) *Bonus Managing Means,* the points of each player on team T1 are not reduced even if the team points of team T1 are reduced. In other words, although there are cases wherein points are transferred on a team unit basis, the points of each individual player depend on his or her game performance. Accordingly, each player can enjoy changes in rivalry among the teams as a result of the transfer of points on a team unit basis, and can also aim to increase rank by improving his or her own performance.

Furthermore, the displaying means 232 can display the number of people on a team and the standing of each player within the team. Displaying the player's standing within the team makes it possible to cause the player to recognize that he or she is being evaluated, thus further increasing his or her desire to participate in the competition.

Furthermore, the display mode of the interteam multiplayer competition shown in FIG. 14 is just one example, and the present invention is not limited thereto. For example, instead of a bar graph, other forms of graphs may be used, such as a line graph or a pie chart, and a three dimensional display mode may also be used.

### (4) Process Flow

### (4-1) Flow of the Process Between the Center Server and the Game Terminal Apparatus

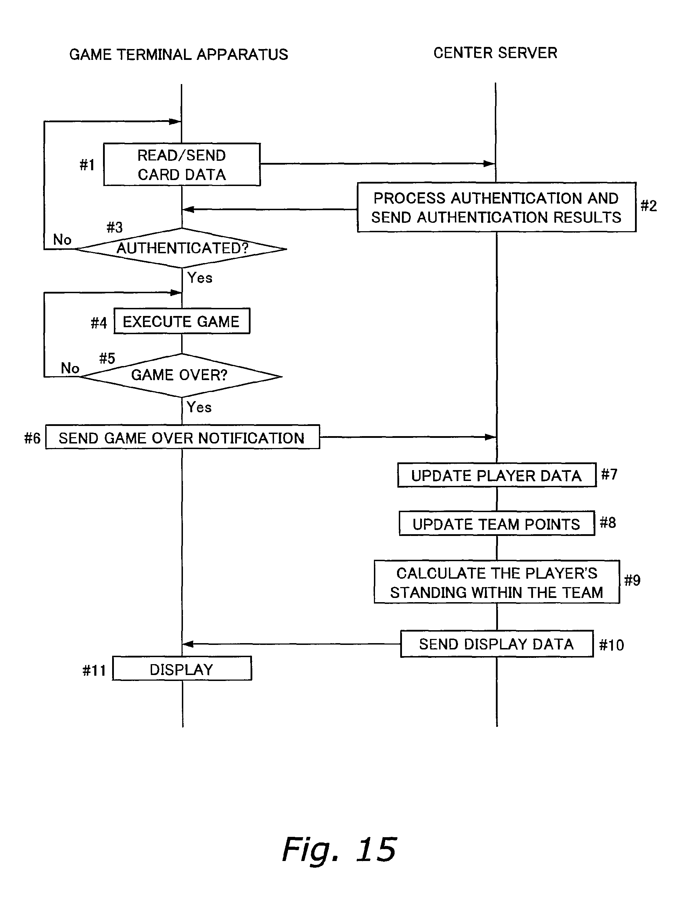

The following explains one example of the flow of the process between the center server 100 and the game terminal apparatus 200, referencing FIG. 15.

First, the game executing means 231 of each game terminal apparatus 200 reads the player ID from the magnetic card received from a player, receives the password from that player, and then transmits the player ID and the password to the center server 100 (#1). Furthermore, the authentication information is not limited to, for example, the player ID and the password.

The CPU 101 of the center server 100 authenticates the player based on the combination of the received player ID and the password and transmits the authentication result to the game terminal apparatus 200 (#2). In addition, if the CPU 101 authenticates the player, then it notifies the game terminal apparatus 200 of the assigned rank ID and team ID of that player.

If the authentication result received by the game executing means 231 is "authenticated", then it receives a command to start a game by the player's pressing of the start button. Thereafter, the game executing means 231 executes the game in accordance with the control program that is stored in the ROM 203 (#3, #4, #5) until the game is over. If the result is "not authenticated," then the game executing means 231 once again reads the card and receives the input of the password (#3, #1).

If the game ends, then the game executing means 231 calculates the game points, which indicate the results of the game that just ended, the bonus points granted to the player, and the like. In addition, there are also cases wherein the game executing means 231 carries out a game of chance, such as roulette, after the game is over. The result of the game may be the decision to, for example, "transfer 500 bonus points from team T3 to team Tl." The game points and the result of the game of chance are sent (game over notification) to the center server 100 along with the player ID (#6).

The center server 100 updates personal data based on the game over notification. The team results calculating means 116 of the center server 100 updates the cumulative game points in the personal data based on the received game points (#7). The record to be updated in the personal data is specified by the player ID. In addition, the bonus managing means 118 adds the bonus points to the cumulative game points of the player (#7).

Furthermore, the center server 100 updates team data based on the game over notification. The team results calculating means 116 reads the rank ID and the team ID from the personal data based on the player ID. The received game points are added to the team points that correspond to the read rank ID and team ID (#8). The bonus managing means 118 updates the team points based on the received game of chance result.

In addition to updating the personal data and the team data, the team results calculating means 116 can calculate the player's standing within the team at the present point in time based on the player ID (#9).

The team results calculating means 116 sends the display data of the game terminal apparatus 200 to the game terminal apparatus 200 (#10). The display data includes, for example, the latest team points of each team in the rank to which the player is assigned, the player's standing within his or her team, and the number of players on the team.

The displaying means 232 of the game terminal apparatus 200 that receives the display data outputs a display based on the received data (#11). Thereby, the game terminal apparatus 200 displays the screen illustrated in FIG. 14.

### (4-2) Team Organizing Process

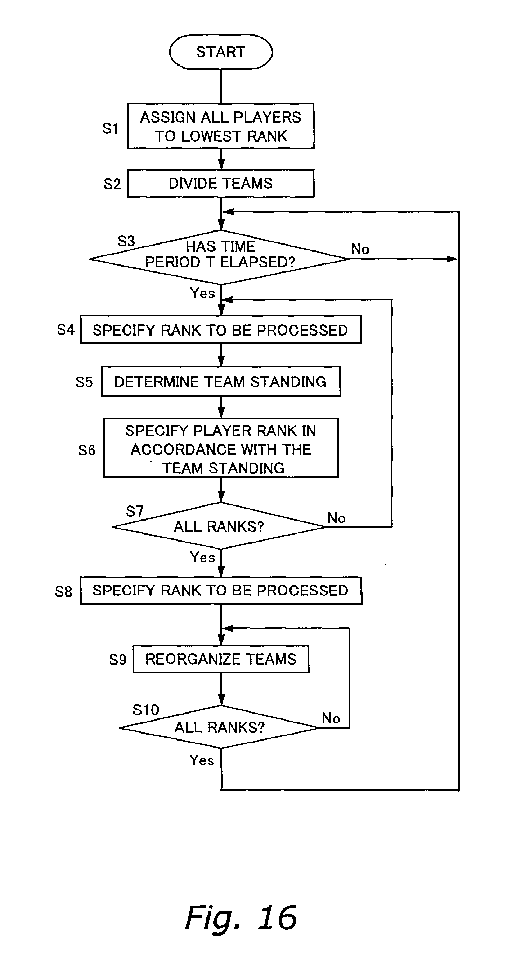

FIG. 16 is a flow chart that shows one example of the flow of the team organizing process performed by the center server 100. The team organizing process can be broadly divided into three stages: an initialization process, a rank re-determining process, and a team reorganizing process. To simplify the explanation, the following processes take up an example of a case wherein the same number of teams are organized in each rank.

### (Initialization Process)

Step S1: The ranks in the center server 100 are preset to a plurality of ranks S-CIII and stored. The initial rank determining means 112 assigns all players to the lowest rank CIII. In other words, the initial rank determining means 112 overwrites all ranks in the personal data to "CIII".

Step S2: The team organizing means 114 divides the players that are assigned to the lowest rank CIII into a plurality of teams.

### (Rank Re-Determining Process)

Step S3: The rank re-determining means 113 monitors for the lapse of the prescribed time period T since the previous team organization and executes the process in steps S4-S7 every time it elapses. Steps S4-S7 perform the process of updating the rank of each player in each rank in accordance with his or her team's standing within the rank to which the player is assigned.

Step S4: The rank re-determining means 113 specifies the rank to be processed.

Step S5: The rank re-determining means 113 determines the standing of each team within the rank to be processed based on that team's points. For example, if the rank to be processed is CIII, then the standings of teams T1-T5 within rank CIII are determined based on the number of team points, in order from high to low.

Step S6: The rank re-determining means 113 updates the rank of each player assigned to each team in accordance with the team standing.

Step S7: The rank re-determining means 113 determines whether the player ranks have been updated for all ranks. If "yes," then the process transitions to step S8. If "no," then the process returns to step S4 wherein the abovementioned process is repeated.

### (Team Reorganizing Process)

In steps S8-S10, after all player ranks have been updated, the teams are reorganized by rank.

Step S8: The team reorganizing means 115 dissolves the existing teams and specifies the rank to be processed.

Step S9: The team reorganizing means 115 reorganizes all players who are assigned to the rank to be processed into N new players.

Step S 10: The team reorganizing means 115 determines whether the reorganization of teams is complete for all ranks. If "yes," then the personal data and team data are overwritten and the process returns to step S3 where it stands by for the lapse of the time period T. If "no," then the process returns to step S8 and repeats the process discussed earlier.

The process in steps S8-S10 reorganizes N new teams in each rank.

### (5) Effects

Even if there are strengths and weaknesses in the abilities of the players, there is a possibility that even the weak players will be able to increase rank to a rank that is above their natural abilities as a result of the contributions that the strong players make to the team. Consequently, the desire to participate in the competition can be increased even for players that do not have a lot of skill. Moreover, highly skilled players advance and therefore participate in competition in order to lead their team to increase rank, as well as to increase rank themselves.

Moreover, with every lapse of the prescribed time period T, all player ranks are reviewed and the teams are reorganized. The higher the rank, the smaller the number of people on each team, which increases the effect that the level of contribution made by each player to his or her team has on the team results. As a result, unskilled players are sifted out gradually and only the true power players will increase rank.

As a result, in one kind of multiplayer competition that is called team competition, skilled players assist unskilled players, which makes it possible to stimulate a desire in the unskilled players to participate in the competition. In addition, instilling a spirit of mutual support through team competition makes it possible to encourage a sense of responsibility in the skilled players and to motivate them. Furthermore, because only true power players will increase rank, it is also possible to instill a desire in the skilled players to participate in the competition.

### <Other Embodiments>

(A) In the abovementioned first embodiment, the game points of each player, the teams' points, and the like are updated when the game is over in the game terminal apparatus 200. However, to reduce the burden on the center server 100, the updating of, for example, the game points and the teams' points in the center server 100 can also be performed with every lapse of a prescribed time period T2 (T2 < T). In this case, the game terminal apparatus 200 associates the game points, the game of chance result, and the player ID, and stores them for the prescribed time period T2, e.g., for one day. Furthermore, the stored data is sent to the center server 100 every 24 hours. In the center server 100, the game points of each player, the teams' points, and the like are preferably updated based on the received data. In so doing, it is possible to reduce the computational burden on the center server 100, which receives game over notifications from a plurality of game terminal apparatuses 200.

Furthermore, a game over notification from one of the game terminal apparatuses 200 in this case preferably includes, for example, the player ID and a message that indicates that the game has ended. Furthermore, the center server 100 that receives that game over notification preferably provides a notification of the display data based on the most recent team data and personal data at that point in time. In greater detail, the team points of the team in the rank to which the player who had a game over notification are read from the team data. In addition, the player's standing in the team is calculated based on his or her game points at that point in time. The read or calculated data is sent from the center server 100 to the game terminal apparatus 200 in response to a game over notification.

(B) In the abovementioned first embodiment, the number of teams organized in each rank is the same, however they may be different. In that case, the number of teams in each rank is preferably determined and stored by the rank setting means 111 in advance.

(C) The present invention encompasses a program for executing the method discussed above on a computer, as well as a computer readable storage medium whereon such a program is recorded. Herein, the program may be downloadable. Examples of storage media include a computer readable/writable flexible disk, a hard disk, semiconductor memory, a CD-ROM, a DVD, and a magneto-optic disk (MO). The display calculation was performed by the game terminal 200, but may be performed by the center server after which the display data is distributed *en batch* to all relevant game terminals 200.

## Claims

1. A game results evaluating method that tabulates game results obtained by a plurality of players who play a game, and evaluates those tabulated results, comprising:
A: a rank setting step that sets L prescribed ranks;
B: an initial rank determining step that assigns the plurality of players to any one of the L ranks;
C: a team organizing step that organizes a plurality of teams, each of which includes at least one player, in each rank wherein players are assigned by the abovementioned initial rank determining step;
D: a team results calculating step that calculates a cumulative value of the game results of the game that was played by each player assigned to each team during a prescribed time period, and calculates the results of each team during the time period based on the calculated cumulative value of the game results of each player;
E: a rank re-determining step that uses the current ranks of each team as a reference to determine whether to rank up, rank down, or maintain the rank of each team based on its results, and redetermines the rank of each team and the rank of each player assigned to each team based on that determination; and
F: a team reorganizing step that dissolves all of the teams in each rank wherein a team exists, and, based on the rank of each player that was re-determined by the rank re-determining step, reorganizes the players into a plurality of teams, wherein each team includes at least one player, for each rank wherein a player exists.

2. A game results evaluating method as recited in Claim 1, further comprising:
a repeating step that repetitively performs the team results calculating step, the rank re-determining step, and the team reorganizing step with every lapse of the prescribed time period.

3. A game results evaluating method as recited in Claim 1 or Claim 2, wherein
the team reorganizing step creates a plurality of teams in each rank wherein a player exists based on the cumulative value of the game results of each player, which was calculated by the team results calculating step, during a prescribed time period.

4. A game results evaluating method as recited in any one claim of Claim 1 through Claim 3, further comprising:
a storing step that stores, as points, the cumulative value of the game results of the game that was played by each player and the result of each team during the time period;
wherein,
the team results calculating step displays the result of each team during the time period as points;
further comprising:
a bonus managing step that, after the end of a game played by an arbitrary player PT1 on a team T1, subtracts arbitrary points P from the results of team T2, which are stored in the storing step, and adds the points P to the game results cumulative value of the player PT1, which is stored in the storing step, and to the results of the team T1 to which that player is assigned.

5. A game results evaluating method as recited in Claim 4, wherein
the bonus managing step maintains unaltered the game results cumulative value, which was stored in the storing step, of each player on the team T2.

6. A game results evaluating method as recited in any one claim of Claim 1 through Claim 5,
wherein
the initial rank determining step assigns all of the plurality of players to the lowest rank of the L ranks; and
the rank re-determining step accepts the joining of a new player after the start of the prescribed time period and allocates the new player to any team in the lowest rank.

7. A game results evaluating method as recited in any one claim of Claim 1 through Claim 6, further comprising:
a displaying step that displays the results of each team and/or the standing within the team of each player midway through the prescribed time period.

8. A game results evaluating method as recited in Claim 7, wherein
every time the game results of an arbitrary player are output, the displaying step displays the change in that player's team results.

9. A game results evaluating apparatus that tabulates game results, which are obtained by a plurality of players who play a game, and evaluates those tabulated results, comprising:
A: rank setting means that sets L prescribed ranks;
B: initial rank determining means that assigns the plurality of players to any one of the L ranks;
C: team organizing means that organizes a plurality of teams, each of which includes at least one player, in each rank wherein players are assigned by the abovementioned initial rank determining means;
D: team results calculating means that calculates a cumulative value of the game results of the game that was played by each player assigned to each team during a prescribed time period, and calculates the results of each team during the time period based on the calculated cumulative value of the game results of each player;
E: rank re-determining means that uses the current ranks of each team as a reference to determine whether to rank up, rank down, or maintain the rank of each team based on its results, and redetermines the rank of each team and the rank of each player assigned to each team based on that determination; and
F: team reorganizing means that dissolves all of the teams in each rank wherein a team exists, and, based on the rank of each player that was re-determined by the rank re-determining means, reorganizes the players into a plurality of teams, wherein each team includes at least one player, for each rank wherein a player exists.

10. A game results evaluating program that tabulates game results, which are obtained by a plurality of players who play a game, and evaluates those tabulated results, wherein the program causes a computer to function as:
A: rank setting means that sets L prescribed ranks;
B: initial rank determining means that assigns the plurality of players to any one of the L ranks;
C: team organizing means that organizes a plurality of teams, each of which includes at least one player, in each rank wherein players are assigned by the abovementioned initial rank determining means;
D: team results calculating means that calculates a cumulative value of the game results of the game that was played by each player assigned to each team during a prescribed time period, and calculates the results of each team during the time period based on the calculated cumulative value of the game results of each player;
E: rank re-determining means that uses the current ranks of each team as a reference to determine whether to rank up, rank down, or maintain the rank of each team based on its results, and redetermines the rank of each team and the rank of each player assigned to each team based on that determination; and
F: team reorganizing means that dissolves all of the teams in each rank wherein a team exists, and, based on the rank of each player that was re-determined by the rank re-determining means, reorganizes the players into a plurality of teams, wherein each team includes at least one player, for each rank wherein a player exists.
